# EUROPEAN PATENT SPECIFICATION

(11) **EP 3 581 301 B1**
(45) Date of publication and mention of the grant of the patent: **17.02.2021**
(21) Application number: 19178651.6
(22) Date of filing: 06.06.2019
(51) Int. Cl.: B23B 3/26, B23B 29/034

(54) **TURNING DEVICE WITH STATIC BAR**
DREHBANK MIT STATISCHER STANGE
DISPOSITIF DE TOURNAGE AVEC BARRE STATIQUE

(30) Priority: 12.06.2018 IT 201800006221
(43) Date of publication of application: 18.12.2019
(73) Proprietor: Bucci Automations S.p.A., 48018 Faenza (RA) (IT)
(72) Inventor: CUSUMANO, Dario, 48018 FAENZA RA (IT); VINCENZI, Nicolo', 48018 FAENZA RA (IT)
(74) Representative: Modiano, Micaela Nadia

(56) References cited:
- EP-A1- 2 052 811
- WO-A1-00/02690
- GB-A- 2 498 061
- US-A- 4 452 553

## Description

The present invention relates to a turning device with static bar.

The operation of lathes generally involves clamping the bar to be machined in a spindle, which then rotates it. The tool that is used to remove material from the bar can be moved (hewing the surface of the bar) in a radial and/or longitudinal direction.

For fixed-bar lathes, on the other hand, the bar is rigidly coupled to the fixed frame, in a cantilevered arrangement, while the tool is arranged on a rotating assembly that can be moved around the bar while executing the desired machining.

This second type of lathe is particularly efficient for some specific kinds of machining and therefore it is quite widespread.

The particular architecture of such lathes determines some problems.

First of all it is necessary to make the tools machine in a cantilevered arrangement and this implies a number of competing possible problems.

If the supporting arms of the tools are generously dimensioned they can provide a good overall rigidity and, therefore, a high precision of the machining, but, against this, it will also determine a considerable increase of the rotating masses, with consequent problems of dimensioning and balancing.

More slender supporting arms are less subject to phenomena of inertia and any vibrations can be reduced (eliminated) through easy balancing operations, but, by contrast, they can undergo slight deformations during the turning operations, which reduce their precision.

Furthermore the movement of the tool is generally very complicated, in that it is necessary to be able to execute it during rotation of the entire assembly that supports it. Often, executing continuous changes of position of the tool during machining is extremely complicated and does not ensure the necessary precision.

Finally, it must be remembered that this type of machine tool requires continual and frequent maintenance (in particular with regard to the need for lubrication) which entails machine stops and significant costs.

EP2052811 describes a turning device having a longitudinal or rotary mobile transfer level and multiple clamping devices that are arranged at the periphery of the mobile transfer level for receiving a work piece that is to be processed. A stationary processing unit in the form of a facing unit is arranged outside the transfer level to which the clamping devices are introduced a synchronized manner. A measuring system is integrated in a facing head. A feed unit is arranged at a spindle adjusting a plane slide valve in the x-direction.

The aim of the present invention is to solve the above mentioned drawbacks, by providing a turning device with static bar that ensures a high level of precision.

Within this aim, an object of the invention is to provide a turning device with static bar of low mass.

Another object of the invention is to provide a turning device with static bar that is easily balanced.

Another object of the invention is to provide a turning device with static bar in which the movement of the tool is precise and efficient and can be executed even during the turning operations.

Another object of the invention is to provide a turning device with static bar that requires minimal maintenance.

Another object of the invention is to provide a turning device with static bar that does not require lubrication of the moving parts.

Another object of the present invention is to provide as turning device with static bar which is of low cost, easily and practically implemented, and safe in use.

This aim and these and other objects that will become better apparent hereinafter are achieved by a turning device with static bar of the type comprising a motor, a driving shaft and a sleeve, which defines a seat for temporarily accommodating at least one portion of the bar being machined, a machining tool being coupled directly or indirectly on said sleeve, characterized in that:
a secondary shaft is interposed between said driving shaft of said motor and said sleeve and is coupled to the screw of a first assembly which is constituted by a first recirculating-ball screw and a respective first lead screw, said lead screw being integral with said sleeve,
said sleeve and said first assembly being coaxial and the axis of the driving shaft being parallel to and separate from the common axis of the driving shaft being parallel to and separate from the common axis of the sleeve and of the first assembly;
the device comprises an adjustment element which is coupled to a pusher shaft which is associated with said secondary shaft.

Further characteristics and advantages of the invention will become better apparent from the detailed description that follows of a preferred, but not exclusive, embodiment of the turning device with static bar according to the invention, which is illustrated by way of non-limiting example in the accompanying drawings, wherein:

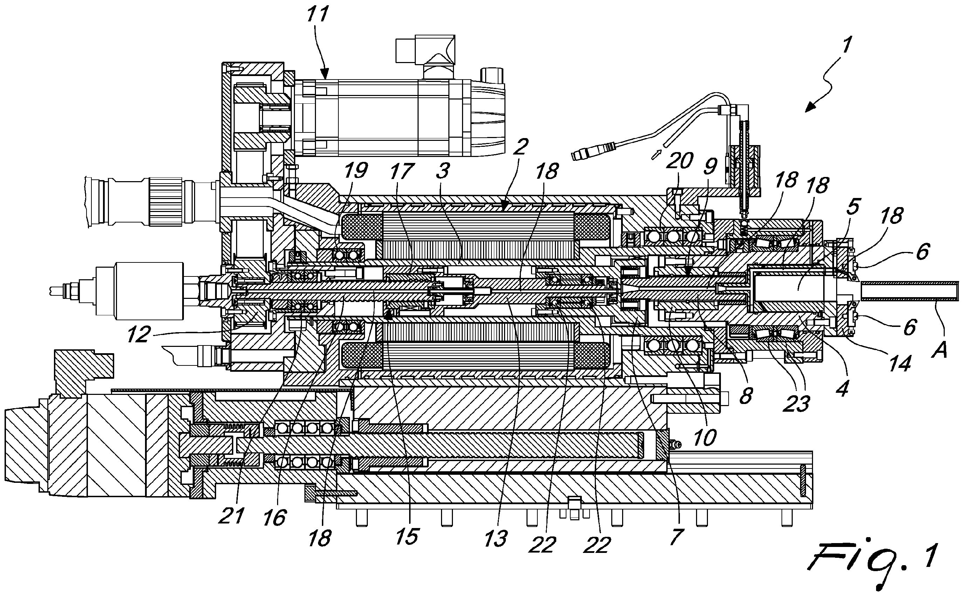

Figure 1 is a cross-sectional side view, taken along a longitudinal plane, of a device according to the invention in a first operating configuration, which is driven by a motor/pulley assembly;

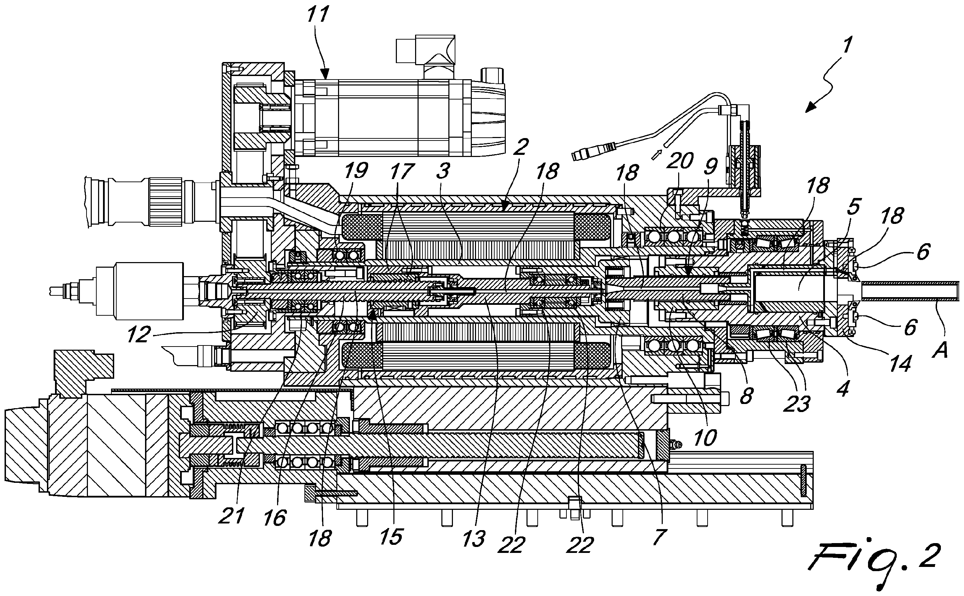

Figure 2 is a cross-sectional side view, taken along a longitudinal plane, of the device in Figure 1 in a second operating configuration;

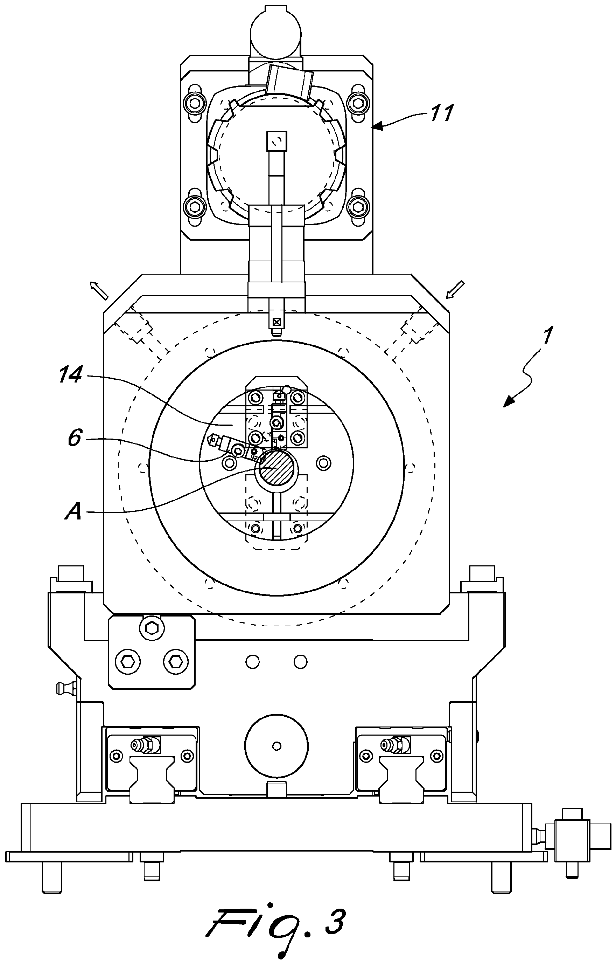

Figure 3 is a front elevation view of the device in Figure 1;

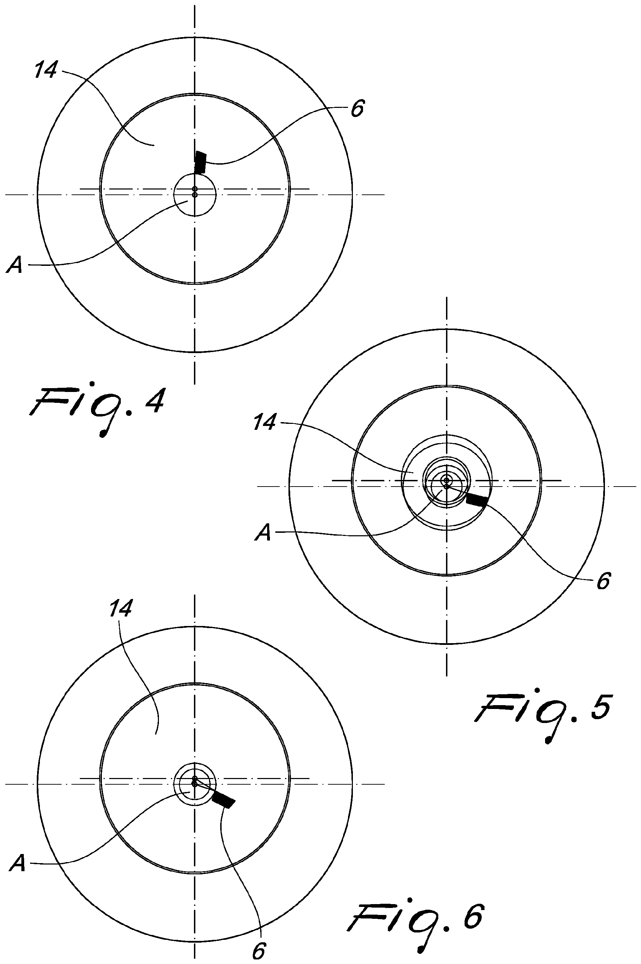

Figure 4 is a schematic front elevation view of a first arrangement of the tool with respect to the bar in the device in Figure 1;
Figure 5 is a schematic front elevation view of a second arrangement of the tool with respect to the bar in the device in Figure 1;
Figure 6 is a schematic front elevation view of a third arrangement of the tool with respect to the bar in the device in Figure 1;

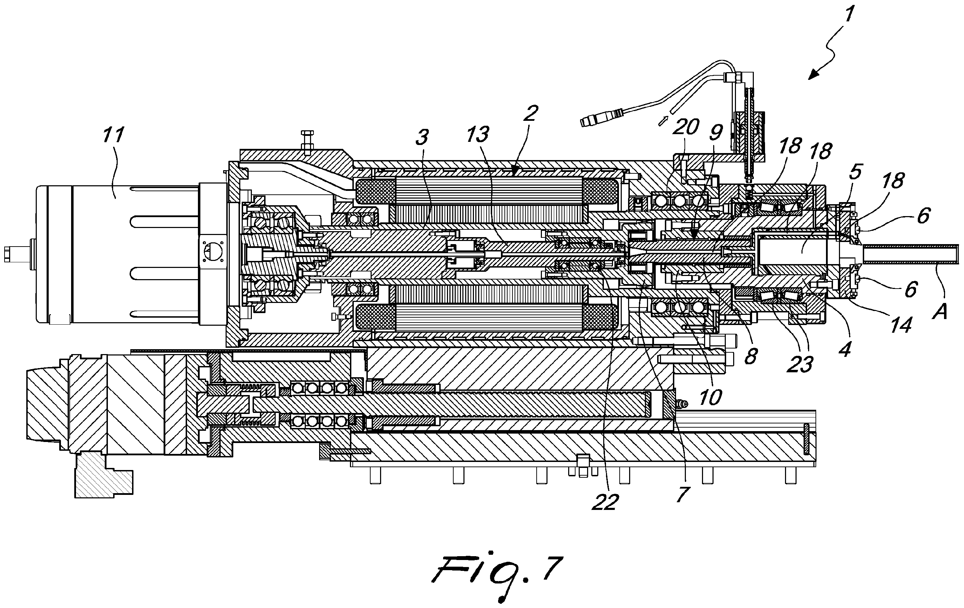

Figure 7 is a cross-sectional side view, taken along a longitudinal plane, of a device according to the invention in a first operating configuration, which is driven by a linear actuator.

With particular reference to the figures, the reference numeral 1 generally designates a turning device with static bar A.

The device 1 comprises a motor 2 of which the driving shaft 3 supports a sleeve 4, which defines a seat 5 for temporarily accommodating at least one portion of the bar A being machined.

A machining tool 6 is coupled on the sleeve 4 (directly or indirectly, i.e. with the interposition of other components).

A secondary shaft 7 is interposed between the driving shaft 3 of the motor 2 and the sleeve 4 and is coupled to the screw 8 of a first assembly 9 which is constituted by a first recirculating-ball screw 8 and a respective first lead screw 10.

The lead screw 10 is integral with the sleeve 4.

It should be noted that the motor 2, the driving shaft 3, the secondary shaft 7, the first screw/lead screw assembly 9 and the sleeve 4 are hollow in the device 1 according to the invention; as will be seen below, this particular shape structure brings undoubted advantages in terms of cooling and lubrication (by allowing the passage of specific fluids).

Since these are axially-symmetrical components, it should be noted that they will have a substantially tubular shape structure; since all the cited components are mutually coaxial, the respective internal cavities will also be mutually coaxial.

The sleeve 4 and the first assembly 9 are conveniently coaxial.

The axis of the driving shaft 3 on the other hand is parallel to and separate from the common axle of the sleeve 4 and of the first group 9, thus defining an eccentricity thereof with respect to such components.

It should furthermore be noted that the device 1 according to the invention comprises an adjustment element 11, which is coupled to an adjustment shaft 12 which can be situated, in a specific application described by way of non-limiting example, in a position arranged opposite from the sleeve 4.

The adjustment shaft 12 is in turn coupled (directly or indirectly, i.e. with the interposition of further components) to a pusher shaft 13.

The pusher shaft 13, through the secondary shaft 7, can generate the translation of the screw 8 and the rotation of the lead screw 10 (as a direct consequence) of the assembly 9.

Such rotation of the lead screw 10 implies a corresponding rotation of the sleeve 4 (which is integral with it) and a movement in a radial direction of the tool 6, i.e. in approach to/distancing from the axis of the motor 2.

In a specific embodiment which is described by way of non-limiting example, the terminal end of the pusher shaft 13 is in turn coupled (in this case too it will generally be an indirect coupling, i.e. with the interposition of other components) to an end flange 14 that can rotate eccentrically on the sleeve 4.

The tool 6, in this case, will be integral with such flange 14.

Again with reference to the embodiment cited by way of non-limiting example above, it should be noted that the rotations of the flange 14 (which as a result of the eccentricity will cause movements in a radial direction of the tool 6, with consequent variation of the depth of the incision made by it on the bar A to be machined) will occur by virtue of the action of the pusher shaft 13, which by pushing on the first recirculating-ball screw 8 of the first screw/lead screw assembly 9 will determine a translation of the screw 8, with consequent rotation of the lead screw 10 (which is integral with the flange 14, which will rotate eccentrically with respect to the sleeve 4).

According to a particular embodiment of undoubted practical and applicative interest, a second assembly 15 can be interposed between the adjustment shaft 12 and the pusher shaft 13 and comprises a second recirculating-ball screw 16 with a corresponding second lead screw 17.

The second screw 16 and the second lead screw 17 are, in such case, accommodated at least partially in the inner cavity of the driving shaft 3 and the second lead screw 17 will be integral with the pusher shaft 13 which translates inside the driving shaft 3.

The terminal end of the pusher shaft 13, coupled to the first recirculating-ball screw 8, will ensure the corresponding translation, with consequent rotation of the flange 14 and displacement of the tool 6 toward or away from the common axle of the sleeve 4 and of the bar A to be machined.

With particular reference to an alternative embodiment to the one described previously, which is also extremely advantageous from an applicative point of view, the adjustment element 11 can conveniently be a numerically-controlled linear actuator (of the type of a numerically-controlled electric cylinder, although the possibility of using different actuators powered by electricity, pneumatics, hydraulics and the like, is not excluded) which is provided with an adjustment shaft 12 which is coaxial to and integral with the pusher shaft 13.

It should be noted that in the device 1 according to the invention the tool 6 is arranged radially with respect to the central hole of the flange 14, with the cutting edge protruding from the inner edge of such hole.

An eccentric rotation of the flange 14, by virtue of the action of the adjustment element 11, generates a translation of the cutting edge in a direction which is radial with respect to the axis of the bar A to be machined and which coincides with the axis of the sleeve 4.

In order to permit a correct cooling and lubrication of the cutting edge of the tool 6, as well as of the bar A that is subjected to turning, it should be noted that the adjustment shaft 12, the second assembly 15 (which comprises the second screw 16 and the second lead screw 17) and the pusher shaft 13 are axially hollow: thanks to the presence of such cavities (and of the axial cavities that are present in the first assembly 9, and the presence of a channel inside the flange 14) a continuous duct 18 is therefore defined which leads to a dispensing nozzle which faces and is proximate to the cutting edge of the tool 6.

Such passage 18 will be connected, upstream, to an apparatus for supplying refrigerant fluid (for example a pump that can ensure the necessary pressure is applied to the fluid conveyed in the passage 18), for the corresponding flow through the passage 18 and the distribution onto the cutting edge of the tool 6 and onto the bar A during turning.

It should be noted that the dispensing nozzle can positively be of the type of an atomizer, a sprayer and the like; the possibility is not ruled out however of adopting a continuous flow of refrigeration and/or lubrication fluid dispensed by way of one or more nozzles or other dispensing devices.

According to a particular embodiment of undoubted practical and applicative interest, the adjustment element 11 comprises a servomotor which is coupled rigidly to the adjustment shaft 12.

The servomotor in such case can advantageously be arranged preferably in a configuration selected from coaxial with the adjustment shaft 12, with direct coupling of the shaft of the servomotor to the adjustment shaft, and offset with respect to the adjustment shaft 12, with the interposition of transmission means preferably of the toothed type (for example the coupling can be implemented using gearwheels or by way of a toothed belt or a chain). In a preferred embodiment, the axis of the servomotor is parallel to the axis of the adjustment shaft 12 (embodiment shown by way of example in the accompanying figures).

It further needs to be specified that the motor 2 is, preferably, an electrospindle with a hollow rotor. Hollow rotor electric motors used as electric spindles are traditional electric motors in which the rotor has an axial cavity inside which other components can be inserted (arranged), either integral with the rotor, such as the driving shaft 3, or separate from it, such as the pusher shaft 13.

The driving shaft 3 is supported by bearings 19, 20 with radial action which are coupled upstream (the bearings 19) and downstream (the bearings 20) to the fixed frame of the motor 2.

Radial-action bearings 21 are interposed between the driving shaft 3 and the second recirculating-ball screw 16, accommodated at least partially inside the driving shaft 3.

It should furthermore be noted that respective radial-action bearings 22 are interposed between the secondary shaft 7 and the pusher shaft 13, arranged inside it, for supporting the pusher shaft 13 and its free axial translational movement according to a preset stroke (in order to allow the necessary thrust to be exerted on the first screw/lead screw assembly 9 intended to adjust the angular position of the flange 14 and therefore the interference of the tool 6 (more precisely of its cutting edge) with the bar to be machined A.

It should be noted on the other hand that the sleeve 4 is supported by bearings 23 for radial and axial support, preferably of a type selected from conical roller bearings, inclined ball bearings and the like.

In practice the device 1 according to the invention, during execution of the turning of a bar A, allows an adjustment of the interference of the cutting edge of the tool 6, which is carried out by way of the thrust exerted by the pusher shaft 13 on the first screw/lead screw assembly 9, which converts the translation imposed by the pusher shaft 13 on the first recirculating-ball screw 8 to a rotation of the lead screw 10, which is integral with the bracket 14 to which the tool 6 is coupled. Since the bracket 14 can rotate eccentrically with respect to the axis of the bar A, a rotation of it implies an approach (or distancing) of the cutting edge of the tool 6 toward (or away from) the axis of the bar A (displacement in a radial direction of the tool 6) and therefore a variation of the depth of incision of the cutting edge on the bar A.

Advantageously the present invention solves the above mentioned problems, by providing a turning device 1 with static bar A that ensures a high level of precision: in fact the tool 6 is rigidly coupled to the bracket 14 and is not in a cantilevered arrangement, thus minimizing the risk of inaccuracies owing to play or bending.

Conveniently the device 1 according to the invention has a substantially low mass, which in any case does not exceed that of conventional devices.

Conveniently the device 1 according to the invention is easily balanced, since most of the components are axially symmetrical and therefore, when rotated, do not cause vibrations owing to the presence of masses that are eccentric to that rotation.

Conveniently the device 1 according to the invention is substantially free from play in particular, thanks to the presence of preloaded components, and is free from play at points of reversal of motion.

Advantageously in the device 1 according to the invention the movement of the tool 6 is precise and efficient and can be executed even during the turning operations.

Profitably the device 1 according to the invention requires minimal maintenance: in fact the bearings 19, 20, 21, 22, 23 do not require periodic lubrication but need only be covered with the right amount of grease in the assembly step only. It has been found therefore that the entire device 1 does not require frequent and periodic maintenance interventions, with considerable advantages in terms of cost and productivity with respect to conventional devices.

Effectively the device 1 according to the invention does not require lubrication of the moving parts.

Positively the present invention makes it possible to provide a turning device 1 with static bar A that is easily and practically implemented and substantially of low cost: such characteristics make the device 1 according to the invention an innovation that is safe in use.

## Claims

1. A turning device for a static bar (A) of the type comprising a motor (2), a driving shaft (3) and a sleeve (4), which defines a seat (5) for temporarily accommodating at least one portion of the bar (A) being machined, a machining tool (6) being coupled directly or indirectly on said sleeve (4), wherein
a secondary shaft (7) is interposed between said driving shaft (3) of said motor (2) and said sleeve (4) and is coupled to a screw (8) of a first assembly (9) which is constituted by a first recirculating-ball screw (8) and a respective first lead screw (10), said lead screw (10) being integral with said sleeve (4),
said sleeve (4) and said first assembly (9) being coaxial and the axis of the driving shaft (3) being parallel to and separate from a common axis of the sleeve (4) and of the first assembly (9);
the device further comprises an adjustment element (11) which is coupled to a pusher shaft (13) which is associated with said secondary shaft (7),
said pusher shaft (13), through said secondary shaft (7), causing a translation of the screw (8) and a rotation of said lead screw (10) of the assembly (9), with consequent rotation of said sleeve (4) and a movement in a radial direction of said tool (6).

2. The device according to claim 1, **characterized in that** a second assembly (15) is interposed between an adjustment shaft (12) and said pusher shaft (13) of said adjustment element and comprises a second recirculating-ball screw (16) with a corresponding second lead screw (17), said second screw (16) and said second lead screw (17) being accommodated at least partially in the inner cavity of said driving shaft (3) and said second lead screw (17) being integral with said pusher shaft (13) which translates inside said driving shaft (3), the terminal end of said pusher shaft (13) being coupled to said first recirculating-ball screw (8) for the corresponding translation, said tool (6) being integral with a flange (14) which can rotate eccentrically with respect to the terminal edge of said sleeve (4) by virtue of the action of said first lead screw (10).

3. The device according to claim 1, **characterized in that** said adjustment element (11) is a numerically-controlled linear actuator which is provided with an adjustment shaft which is coaxial and integral with said pusher shaft (13).

4. The device according to claim 1, **characterized in that** said motor (2), said driving shaft (3), said secondary shaft (7), said first screw/lead screw assembly (9) and said sleeve (4) are hollow, said cavity being adapted for the conveyance of a flow of fluid of the type selected preferably from a refrigerant fluid, a lubricant fluid and the like.

5. The device according to claim 2, **characterized in that** said adjustment shaft (12), said second assembly (15) which comprises said second screw (16) and said second lead screw (17), and said pusher shaft (13) are axially hollow, a continuous duct (18) being defined in the cavity of said adjustment shaft (12), said second screw/lead screw assembly (15), said pusher shaft (13), said first screw/lead screw assembly (9) and a channel inside said flange (14), said duct (18) leading to a dispensing nozzle which faces and is proximate to the cutting edge of said tool (6), said duct (18) being connected upstream to an apparatus for supplying refrigerant fluid, for the flow thereof through the duct (18) and distribution onto the cutting edge of the tool (6) and onto the bar (A) during turning.

6. The device according to claim 2, **characterized in that** said adjustment element (11) comprises a servomotor which is coupled rigidly to said adjustment shaft (12), said servomotor being arranged preferably in a configuration selected from coaxial to said adjustment shaft (12), with direct coupling of the shaft of the servomotor to the adjustment shaft (12), and offset with respect to said adjustment shaft (12), with the interposition of transmission means preferably of the toothed type.

7. The device according to claim 1, **characterized in that** said motor (2) is an electrospindle with a hollow rotor.

8. The device according to claim 2, **characterized in that** said machining tool (6) is arranged radially with respect to the central hole of said flange (14), with the cutting edge protruding with respect to the inner edge of said hole, an eccentric rotation of said flange (14), by virtue of the action of said adjustment element (11), generating a translation of said cutting edge in a direction which is radial with respect to the axis of the bar to be machined (A) and which coincides with the axis of said sleeve (4).

## Patentansprüche

1. Eine Drehbank für eine statische Stange (A) von der Art, die einen Motor (2), eine Antriebswelle (3) und eine Büchse (4) umfasst, die einen Sitz (5) zur vorübergehenden Aufnahme mindestens eines Abschnitts der Stange (A) bestimmt, die maschinell bearbeitet wird, wobei ein Bearbeitungswerkzeug (6) direkt oder indirekt an der Büchse (4) gekoppelt ist, wobei eine sekundäre Welle (7) zwischen der Antriebswelle (3) des Motors (2) und der Büchse (4) angeordnet und mit einer Schraube (8) einer ersten Baugruppe (9) gekoppelt ist, die aus einer ersten Kugelumlaufschraube (8) und einer entsprechenden ersten Verstellschraubenspindel (10) besteht, wobei die Verstellschraubenspindel (10) integral mit der Büchse (4) ist,
wobei die Büchse (4) und die erste Baugruppe (9) koaxial sind und die Achse der Antriebswelle (3) parallel zu und getrennt von einer gemeinsamen Achse der Büchse (4) und der ersten Baugruppe (9) ist;
die Vorrichtung umfasst weiter ein Anpassungselement (11), das mit einem Schieberschaft (13) gekoppelt ist, der mit der sekundären Welle (7) verbunden ist,
wobei der Schieberschaft (13) über die sekundäre Welle (7) eine Translation der Schraube (8) und eine Drehung der Verstellschraubenspindel (10) der Baugruppe (9) auslöst, mit sich daraus ergebender Drehung der Büchse (4) und einer Bewegung in eine radiale Richtung des Werkzeugs (6).

2. Die Vorrichtung gemäß Anspruch 1, **dadurch gekennzeichnet, dass** eine zweite Baugruppe (15) zwischen einer Justierwelle (12) und dem Schieberschaft (13) des Anpassungselements angeordnet ist und eine zweite Kugelumlaufschraube (16) mit einer entsprechenden Verstellschraubenspindel (17) umfasst, wobei die zweite Schraube (16) und die zweite Verstellschraubenspindel (17), zumindest teilweise, im inneren Hohlraum der Antriebswelle (3) untergebracht sind und die zweite Verstellschraubenspindel (17) integral mit dem Schieberschaft (13) ist, der eine Translation innerhalb der Antriebswelle (3) durchführt, wobei das terminale Ende des Schieberschafts (13) zur entsprechenden Translation mit der ersten Kugelumlaufschraube (8) gekoppelt ist, wobei das Werkzeug (6) integral mit einem Flansch (14) ist, der sich durch die Wirkung der ersten Verstellschraubenspindel (10) exzentrisch mit Bezug auf die terminale Kante der Büchse (4) drehen kann.

3. Die Vorrichtung gemäß Anspruch 1, **dadurch gekennzeichnet, dass** das Anpassungselement (11) ein numerisch gesteuerter Linearaktor ist, der mit einer Justierwelle ausgestattet ist, welche koaxial und integral mit dem Schieberschaft (13) ist.

4. Die Vorrichtung gemäß Anspruch 1, **dadurch gekennzeichnet, dass** der Motor (2), die Antriebswelle (3), die sekundäre Welle (7), die Baugruppe (9) aus erster Schraube und Verstellschraubenspindel und die Büchse (4) hohl sind, wobei der Hohlraum ausgebildet ist für die Übertragung einer Strömung von Fluid, von der Art, die vorzugsweise gewählt ist aus einem Kühlfluid, einem Schmierfluid und dergleichen.

5. Die Vorrichtung gemäß Anspruch 2, **dadurch gekennzeichnet, dass** die Justierwelle (12), die zweite Baugruppe (15), die die zweite Schraube (16) und die zweite Verstellschraubenspindel (17) umfasst, und der Schieberschaft (13) axial hohl sind, wobei ein kontinuierlicher Durchgang (18) im Hohlraum der Justierwelle (12), der Baugruppe (15) aus zweiter Schraube und Verstellschraubenspindel, dem Schieberschaft (13), der Baugruppe (9) aus erster Schraube und Verstellschraubenspindel und einem Kanal innerhalb des Flanschs (14) bestimmt ist, wobei der Durchgang (18) zu einer Abgabedüse führt, die der Schneidkante des Werkzeugs (6) zugewandt ist und an sie angrenzt, wobei der Durchgang (18) stromaufwärts mit einer Vorrichtung zum Zuführen von Kühlfluid verbunden ist, zum Zwecke des Strömens desselben durch den Durchgang (18) und der Verteilung auf der Schneidkante des Werkzeugs (6) und auf der Stange (A) während des Drehens.

6. Die Vorrichtung gemäß Anspruch 2, **dadurch gekennzeichnet, dass** das Anpassungselement (11) einen Servomotor umfasst, der starr mit der Justierwelle (12) gekoppelt ist, wobei der Servomotor vorzugsweise in einer Konfiguration angeordnet ist, die gewählt ist aus koaxial mit der Justierwelle (12), mit direkter Kopplung der Welle des Servomotors mit der Justierwelle (12), und versetzt von der Justierwelle (12), mit Zwischenschaltung von Übertragungsmitteln, vorzugsweise vom gezahnten Typ.

7. Die Vorrichtung gemäß Anspruch 1, **dadurch gekennzeichnet, dass** der Motor (2) eine Elektrospindel mit hohlem Rotor ist.

8. Die Vorrichtung gemäß Anspruch 2, **dadurch gekennzeichnet, dass** das Bearbeitungswerkzeug (6) radial zum zentralen Loch des Flanschs (14) angeordnet ist, wobei die Schneidkante mit Bezug auf die Innenkante des Lochs vorsteht, wobei eine exzentrische Drehung des Flanschs (14) durch die Wirkung des Anpassungselements (11) eine Translation der Schneidkante in eine Richtung erzeugt, die radial zur Achse der zu bearbeitenden Stange (A) ist und mit der Achse der Büchse (4) zusammenfällt.

## Revendications

1. Tour pour une barre statique (A) du type comportant un moteur (2), un arbre d'entraînement (3) et un fourreau (4), qui définit un logement (5) pour recevoir temporairement au moins une partie de la barre (A) en cours d'usinage, un outil d'usinage (6) étant accouplé directement ou indirectement sur ledit fourreau (4),
dans lequel un arbre secondaire (7) est intercalé entre ledit arbre d'entraînement (3) dudit moteur (2) et ledit fourreau (4) et est accouplé à une vis (8) d'un premier ensemble (9) qui est constitué d'une première vis à recirculation de billes (8) et d'une première vis mère (10), ladite vis mère (10) étant solidaire dudit fourreau (4),
ledit fourreau (4) et ledit premier ensemble (9) étant coaxiaux et l'axe de l'arbre d'entraînement (3) étant parallèle à un axe commun du fourreau (4) et du premier ensemble (9) et séparé de celui-ci,
le tour comporte en outre un élément de réglage (11) qui est accouplé à un arbre de poussée (13) qui est associé audit arbre secondaire (7),
ledit arbre de poussée (13), par l'intermédiaire dudit arbre secondaire (7), entraînant une translation de la vis (8) et une rotation de ladite vis mère (10) de l'ensemble (9), avec une rotation conséquente dudit fourreau (4) et un mouvement dans une direction radiale dudit outil (6).

2. Tour selon la revendication 1 , **caractérisé en ce qu'**un second ensemble (15) est intercalé entre un arbre de réglage (12) et ledit arbre de poussée (13) dudit élément de réglage et comporte une seconde vis à recirculation de billes (16) avec une seconde vis mère (17) correspondante, ladite seconde vis (16) et ladite seconde vis mère (17) étant reçues au moins partiellement dans la cavité intérieure dudit arbre d'entraînement (3) et ladite seconde vis mère (17) étant solidaire dudit arbre de poussée (13) qui se déplace en translation à l'intérieur dudit arbre d'entraînement (3), l'extrémité terminale dudit arbre de poussée (13) étant accouplée à ladite première vis à recirculation de billes (8) pour la translation correspondante, ledit outil (6) étant solidaire d'une bride (14) qui peut tourner de manière excentrée par rapport au bord terminal dudit fourreau (4) du fait de l'action de ladite vis mère (10).

3. Tour selon la revendication 1, **caractérisé en ce que** ledit élément de réglage (11) est un actionneur linéaire à commande numérique qui est pourvu d'un arbre de réglage qui est coaxial audit arbre de poussée (13) et solidaire de celui-ci.

4. Tour selon la revendication 1, **caractérisé en ce que** ledit moteur (2), ledit arbre d'entraînement (3) , ledit arbre secondaire (7), ledit premier ensemble de vis/vis mère (9) et ledit fourreau (4) sont creux, ladite cavité étant adaptée pour le transport d'un écoulement de fluide du type de préférence choisi parmi un fluide frigorigène, un fluide lubrifiant et analogue.

5. Tour selon la revendication 2, **caractérisé en ce que** ledit arbre de réglage (12), ledit second ensemble (15) qui comporte ladite seconde vis (16) et ladite seconde vis mère (17), et ledit arbre de poussée (13) sont axialement creux, un conduit continu (18) étant défini dans la cavité dudit arbre de réglage (12), dudit second ensemble de vis/vis mère (15), dudit arbre de poussée (13), dudit premier ensemble de vis/vis mère (9) et d'un canal à l'intérieur de ladite bride (14), ledit conduit (18) menant à une buse de distribution qui fait face à l'arête tranchante dudit outil (6) et est proche de celle-ci, ledit conduit (18) étant relié en amont à un appareil pour fournir du fluide frigorigène, pour l'écoulement de celui-ci à travers le conduit (18) et une distribution sur l'arête tranchante de l'outil (6) et sur la barre (A) pendant le tournage.

6. Tour selon la revendication 2, **caractérisé en ce que** ledit élément de réglage (11) comporte un servomoteur qui est rigidement accouplé audit arbre de réglage (12), ledit servomoteur étant agencé de préférence dans une configuration choisie parmi coaxial audit arbre de réglage (12), avec un accouplement direct de l'arbre du servomoteur à l'arbre de réglage (12), et décalé par rapport audit arbre de réglage (12), avec l'interposition de moyens de transmission de préférence du type denté.

7. Tour selon la revendication 1, **caractérisé en ce que** ledit moteur (2) est une électrobroche avec un rotor creux.

8. Tour selon la revendication 2, **caractérisé en ce que** ledit outil d'usinage (6) est agencé radialement par rapport au trou central de ladite bride (14), avec l'arête tranchante en saillie par rapport au bord intérieur dudit trou, une rotation excentrée de ladite bride (14), du fait de l'action dudit élément de réglage (11), générant une translation de ladite arête tranchante dans une direction qui est radiale par rapport à l'axe de la barre (A) à usiner et qui coïncide avec l'axe dudit fourreau (4).
